(19) Europäisches Patentamt
European Patent Office
Office européen des brevets

(11) EP 0 581 641 B1

(12) FASCICULE DE BREVET EUROPEEN

(45) Date de publication et mention de la délivrance du brevet: **11.06.1997 Bulletin 1997/24**

(51) Int Cl.[6]: **C08G 69/48**, C08G 63/91, C08G 65/48, C08G 65/32

(21) Numéro de dépôt: **93401872.2**

(22) Date de dépôt: **20.07.1993**

(54) **Polymères et copolymères issus de l'addition d'oligomères à terminaisons di-amino et di-hydroxy et de bisoxazinones ou de bisoxazolinones**

Durch Addition von Oligomeren mit Dihydroxy oder Diamino-Endgruppen zu Bisoxazinonen oder Bisoxazolinonen hergestellte Polymere oder Copolymere

Polymers and copolymers prepared by the addition of di-hydroxy or di-amino terminated oligomers to bisoxazinones or bisoxazolines

(84) Etats contractants désignés:
**AT BE CH DE DK ES FR GB GR IE IT LI LU NL PT SE**

(30) Priorité: **24.07.1992 FR 9209184**

(43) Date de publication de la demande: **02.02.1994 Bulletin 1994/05**

(73) Titulaire: **ELF ATOCHEM S.A.**
**92800 Puteaux (FR)**

(72) Inventeurs:
- **Acevedo, Margarita**
  **E-28034 Madrid (ES)**
- **Fradet, Alain**
  **F-92130 Issy Les Moulineaux (FR)**
- **Judas, Didier**
  **F-75017 Paris (FR)**

(74) Mandataire: **Le Guen, Gérard**
**CABINET LAVOIX**
**2, place d'Estienne d'Orves**
**75441 Paris Cédex 09 (FR)**

(56) Documents cités:
- **PATENT ABSTRACTS OF JAPAN vol. 5, no. 35 (C-046)5 Mars 1980 & JP-A-55 160 025**
- **PATENT ABSTRACTS OF JAPAN vol. 4, no. 186 (C-036)20 Décembre 1980 & JP-A-55 127 432**
- **PATENT ABSTRACTS OF JAPAN vol. 5, no. 49 (C-049)8 Avril 1981 & JP-A-56 002 320**
- **PATENT ABSTRACTS OF JAPAN vol. 6, no. 122 (C-112)7 Juillet 1982 & JP-A-57 049 615**

Remarques:
Le dossier contient des informations techniques présentées postérieurement au dépôt de la demande et ne figurant pas dans le présent fascicule.

EP 0 581 641 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention concerne des polymères et des copolymères pouvant atteindre des masses molaires élevées et leur procédé d'obtention à pression atmosphérique, sans élimination de sous-produits, par une réaction rapide adaptable au procédé R.I.M. (moulage par injection et réaction) à 150-350° C. Plus précisément, cette réaction est une addition de coupleurs de chaînes de type iminoesters cycliques et d'oligomères à extrémités réactives hydroxy ou amino.

Les polycondensations classiques sont des réactions équilibrées. Il est difficile d'obtenir des polymères de masses molaires élevées à moins de travailler à température élevée, sous pression réduite pendant un temps de réaction très long, d'où l'existence de réactions secondaires et éventuellement de dégradations des polymères.

Pour pallier ces difficultés, la demanderesse a fait réagir en masse des oligomères bien définis à extrémités réactives, à une température supérieure à leur température de fusion, avec des molécules appelées coupleurs de chaîne (CC) pour obtenir un produit de forte masse molaire. Les CC auxquels la demanderesse s'est intéressée sont, plus précisément, des bisoxazinones et des bisoxazolinones.

Il est connu d'utiliser de tels coupleurs de chaînes pour accroître les masses molaires de polymères de masses molaires déjà élevées, porteurs de fonctions réactives, mais présentes en faible teneur. On augmente alors la viscosité de ces polymères, et on en diminue la teneur en fonctions réactives.

Ainsi, le brevet japonais KOKAI TOKKYO KOHO 55160025 décrit le mélange d'un polyamide de masse molaire élevée et comportant peu de fonctions amines terminales, et d'une bisoxazolinone.

Toutefois, ce document selon lequel les produits de départ sont des polymères de masses molaires élevées, n'indique pas comment surmonter les difficultés d'obtention de tels polymères, et particulièrement par polycondensation.

EP-A-0 019 061 décrit une réaction analogue entre un polyester aromatique terminé par des groupes hydroxyle et un bis-cycloiminoester, tel qu'une bisoxazolinone ou une bisoxazinone. JP-A-56 002 320 décrit la réaction d'un polyester saturé sensiblement linéaire avec un monoépoxyde et un bis-cycloiminoéther telle qu'une bisoxaz(ol)inone. JP-A-57 049 615 décrit la réaction d'un polyester saturé sensiblement linéaire ayant une faible teneur en groupes méthyle terminaux, avec une bisoxaz(ol)inone.

La présente invention a donc pour objet des polymères et copolymères comprenant au moins un motif récurrent de formule :

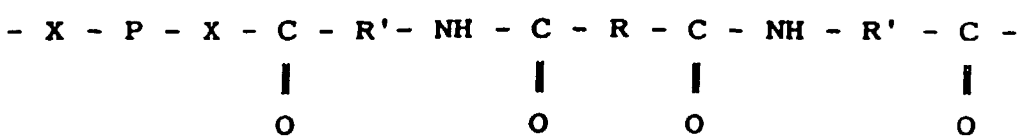

dans laquelle

- X est O ou NH,
- R est une liaison simple, une chaîne hydrocarbonée aliphatique, linéaire ou cyclique, ou aromatique, pouvant être substituée,
- R' est une chaîne hydrocarbonée aliphatique ou aromatique, pouvant être substituée et dont la chaîne la plus courte reliant les motifs - NH ... et

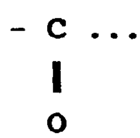

voisins comporte un ou deux atomes de carbone, et
- P est le reste d'un oligomère HX - P - XH dont la viscosité de solution déterminée dans le méta-crésol à 30°C à des concentrations de 0,5 g/dl est inférieure à 0,50 $dl.g^{-1}$, et dont la masse molaire moyenne en nombre $\overline{M_N}$ est comprise entre 300 et 5 000 g/mol,

lesdits polymères étant les produits de réaction d'un ou plusieurs oligomère(s) HX-P-XH tels que définis ci-dessus et d'une ou plusieurs bisoxazinone(s) et/ou bisoxazolinone(s) de formule(s) :

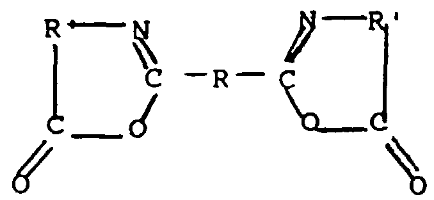

réaction dans laquelle le rapport

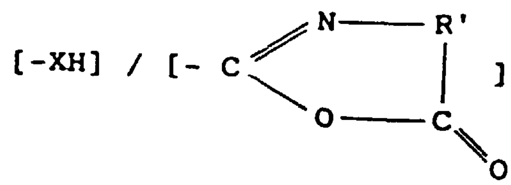

est maintenu entre 0,95 et 1,05.

. R peut par exemple consister en :

- une liaison simple
- une chaîne hydrocarbonée du type $(CH_2)_q$ avec q compris entre 1 et 10 dans laquelle un ou plusieurs atomes de carbone peuvent être mono- ou di- substitués et pouvant comporter un cycle aliphatique ou aromatique, ou encore une insaturation oléfinique,
- un ortho-, méta- ou para- phénylène, ou un ortho-, méta- ou para- alkylphénylène, pouvant être substitués.

. R' peut être par exemple constitué de :

- une chaîne hydrocarbonée du type $(CH_2)_p$, avec p = 1 ou 2, dont un ou deux atomes de carbone constitutifs peuvent être mono- ou di- substitués par des groupes alkyle tels que les groupes méthyle, éthyle, propyle,
- deux de ces atomes de carbone pouvant de surcroît faire partie d'un cycle benzénique, pouvant lui même être substitué par un ou plusieurs groupes alkyle.

. P est le reste d'un oligomère HX - P - XH, dans lequel X représente O ou NH, mono- ou polyséquencé, dont les séquences peuvent par exemple consister en polyamide, polyéther, polyester.

On citera, en particulier :

- un polyamide à extrémités $diNH_2$ à structure aliphatique obtenu à partir de lactame et/ou d'amino acide et/ou de diacide et de diamine en présence d'un excès de diamine, ayant pour formule :

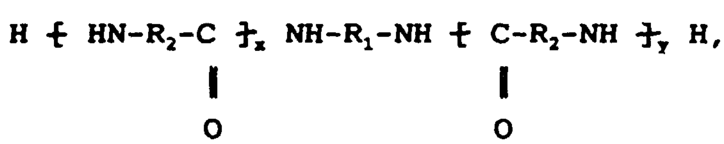

tel que décrit dans la demande de brevet européen EP-A-281 461 au nom de la Demanderesse, et dans lequel

. $R_2$ est :

- une chaîne hydrocarbonée constituant un lactame et/ou un aminoacide dont le nombre d'atomes de carbone est de préférence compris entre 4 et 14,
- une structure

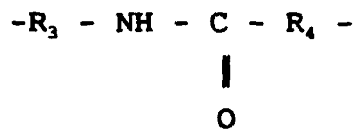

dans laquelle $R_3$ et $R_4$ sont respectivement les restes hydrocarbonés d'une diamine et d'un diacide ;

. $R_1$ représente le reste d'une diamine organique à chaîne hydrocarbonée aliphatique ou cycloaliphatique utilisée comme limitateur de chaîne;
. x et y sont des nombres entiers ≥ 0 tels que $\overline{x + y} \geq 1$;

- un polyamide à extrémités di$NH_2$ à structure aliphatique ou semi-aromatique tel que décrit dans la demande de brevet EP-A-313 436 au nom de la Demanderesse, obtenu à partir de :

  - diacides aromatiques tels qu'acides iso- et téréphtalique, acides naphtalènes dicarboxyliques (en position 2, 6; 1, 5; 2, 7), 4,4'-dicarboxydiphényléther, 4,4'-dicarboxybiphényle,
  - diacides aliphatiques, par exemple en $C_4$ à $C_{24}$ linéaires ou ramifiés tels qu'acides adipique, sébacique, décane-1,10-dioïque, dodécane-1,12-dioïque,
  - diacides cycloaliphatiques tels qu'acide cyclohexo-1,4-dicarboxylique,
  - diamines cycloaliphatiques, par exemple 4, 4'-diamino-bis (cyclohexylméthane) substituée ou non telle la bis (3,3'-méthyl-4,4'-amino-cyclohexylméthane), la bis (4,4'-amino-cyclohexylméthane), l'isophorone diamine,
  - diamines aliphatiques, par exemple en $C_4$ à $C_{24}$ linéaires ou ramifiés, telles que l'hexaméthylène - 1,6-diamine, la dodécaméthylène-1,12-diamine,
  - lactames, par exemple en $C_5$ à $C_{14}$ tels que les caprolactames, dodécalactames,
  - aminoacides, par exemple en $C_5$ à $C_{14}$ tels que l'acide 11-aminoundécanoïque,

  dans un rapport tel que $[COOH]/[NH_2] = m/m+1$, avec m entier ≥ 1,
- un polyéther à terminaisons diOH tel que le polyéthylène glycol, le polypropylène glycol, le polytétraméthylène glycol, ou leurs copolymères,
- un polyéther à terminaisons di$NH_2$ de formule

$$H_2N - Q - O - \text{polyéther} - O - Q - NH_2$$

  dans laquelle Q est une chaîne hydrocarbonée de type $-(CH_2)-_n$, avec $1 \leq n \leq 24$, un ou plusieurs atomes de carbone pouvant être mono- ou disubstitués, obtenu par modification chimique d'un polyéther di-OH, tel que polyéthylène glycol, polypropylène glycol, polytétraméthylène glycol, ou leurs copolymères,
- un oligomère triséquencé (a = 1) ou polyséquencé (a > 1) de formule :

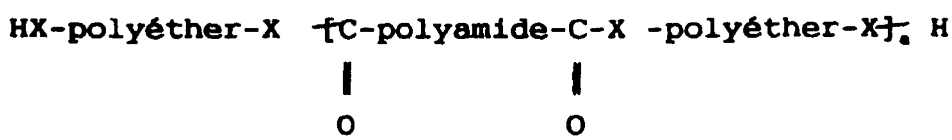

  avec X = O ou NH,
  obtenu à partir de :

  - polyamide à extrémités di-COOH de formule

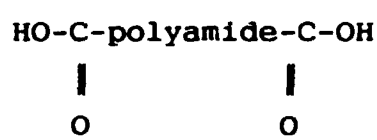

  ou

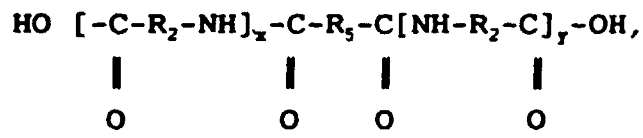

dans laquelle $R_2$ et $R_5$ représentent des chaînes hydrocarbonées aliphatiques, cycloaliphatiques ou aromatiques, x et y des nombres entiers positifs tels que $\overline{x + y} \geq 1$, ce polyamide à extrémités di-COOH étant luimême obtenu à partir des mêmes monomères que le polyamide à extrémités di-$NH_2$ décrit ci-dessus, et de

- polyéther à extrémités di-$NH_2$ ou di-OH, tel que ceux décrits précédemment,

- un polyester à terminaisons diOH, de structure aliphatique ou semi-aromatique obtenu à partir de diacide et/ou d'anhydride d'acide et/ou de diester aromatique et/ou aliphatique et d'un excès de diol, ayant pour formule générale

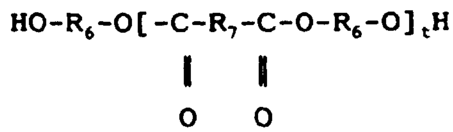

dans laquelle t > 1, $R_6$ représente le reste d'un diol aliphatique en $C_6$ à $C_{24}$ linéaire ou ramifié tel qu'éthylène glycol, propylène glycol, butane -1,4-diol, pentane-1,5-diol, hexane-1,6-diol, diéthylène glycol, triéthylène glycol, $R_7$ représente le reste d'un diacide et/ou d'un anhydride d'acide et/ou d'un diester aromatique, cet anhydride d'acide consistant par exemple en anhydride succinique, phtalique au tétrahydrophtalique, ce diester aromatique en diméthyltéréphtalate, diméthylisophtalate, le diacide étant identique à ceux dont provient $R_5$ défini ci-dessus,
- un polyétherester à terminaisons di-OH, de structure aliphatique ou semi-aromatique de formule

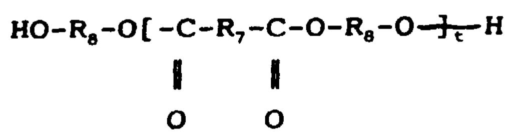

dans laquelle t > 1, $R_7$ est tel que défini ci-dessus, et $R_8$ est le reste d'un diol ou d'un polyéther à terminaisons diOH, ce polyétherester étant obtenu à partir d'un diacide et/ou d'un anhydride d'acide et/ou d'un diester aromatique tels que ceux dont provient le polyester à terminaisons diOH défini ci-dessus, d'un polyéther à terminaisons diOH tel que décrit précédemment, et d'un excès de diol.

Les oligomères HX - P - XH mis en oeuvre ont notamment des viscosités de solutions, déterminées dans le métacrésol à 30° C, à des concentrations de 0,5 g/dl, comprises entre 0,05 et 0,50 $dlg^{-1}$, et des masses molaires moyennes en nombre $\overline{M_N}$ comprises entre 300 et 5000.

Les polymères selon la présente invention sont obtenus par réaction d'addition en masse d'oligomères HX-P-XH et de bisoxazinones et/ou de bisoxazolinones de formule

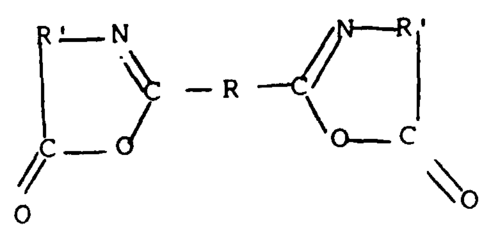

dans laquelle R, R', X et P sont tels que précédemment définis. Cette réaction d'addition ou de couplage est conforme au schéma général suivant :

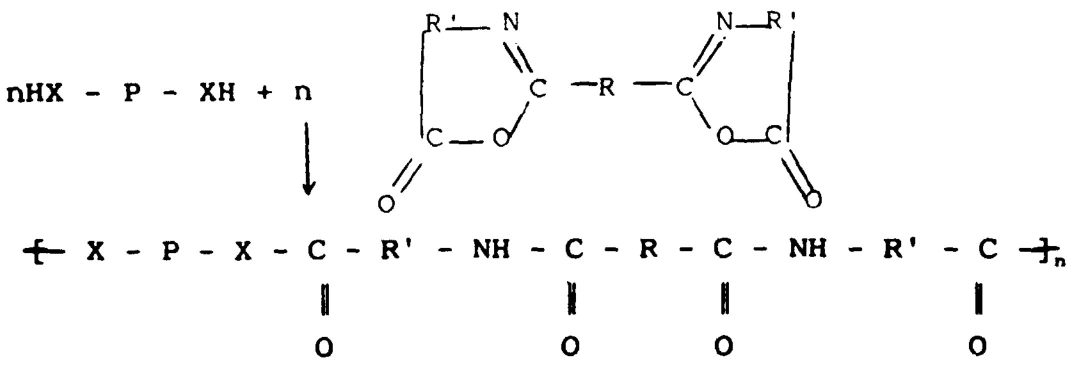

Pour effectuer cette synthèse, il convient de choisir une température telle que la viscosité de l'oligomère soit suffisamment faible, et notamment inférieure à 500 Pa.s et de préférence inférieure à 300 Pa.s, pour que les molécules de coupleurs de chaînes puissent se disperser, s'incorporer et/ou se solubiliser dans l'oligomère. Cette température est comprise entre 100 et 350° C, et de préférence entre 150 et 330° C.

La durée de la réaction sous atmosphère inerte est comprise entre 1 et 120 minutes, de préférence entre 5 et 30 minutes, à pression atmosphérique.

On peut ainsi obtenir des polymères selon l'invention, dont les viscosités de solution déterminées dans le méta-crésol à 30° C, à des concentrations de 0,5 g/dl sont supérieures à celles de l'oligomère (ou des oligomères) de départ pouvant atteindre, par exemple, des valeurs supérieures à 0,8 dl $g^{-1}$, de masses molaires moyennes en nombre $\overline{M_N}$ élevées, supérieures à 10000, sans élimination de sous-produits et sans les autres difficultés inhérentes aux polycondensations classiques.

On peut utiliser un ou plusieurs coupleurs de chaînes et un ou plusieurs oligomères. Ainsi, l'ajout simultané ou au contraire, consécutif, d'oligomères différents, permet d'obtenir des polymères à caractères statistiques ou séquencés plus ou moins prononcés.

L'utilisation d'un catalyseur n'est pas nécessaire, mais accélère la réaction. On ajoute alors 0,001 à 2 % en poids, par rapport aux oligomères et aux coupleurs de chaînes, et de préférence 0,01 à 0,5 % d'un ou plusieurs catalyseurs classiques, tels que la 4, 4' diméthylaminopyridine, l'acide para-toluènesulfonique, $H_3PO_4$, NaOH ou les catalyseurs décrits dans la demande de brevet européen EP-A-425 341 au nom de la Demanderesse.

Dans ces conditions, la réaction peut être effectuée en discontinu dans un réacteur agité, ou dans une extrudeuse. On peut alors opérer par mélange sec, ou incorporer le coupleur dans l'oligomère fondu au niveau d'un fourreau de l'extrudeuse, en l'introduisant en continu en fonction du débit de l'extrudeuse afin de respecter la stoechiométrie des fonctions réactives.

On maintient le rapport

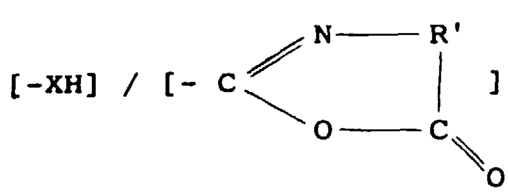

entre 0,95 et 1,05.

De ce fait, le produit de la réaction aura des groupements terminaux -XH si ce rapport est supérieur à 1,

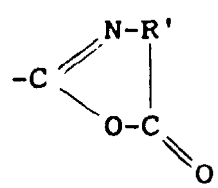

si ce rapport est inférieur à 1 ou à la fois -XH et

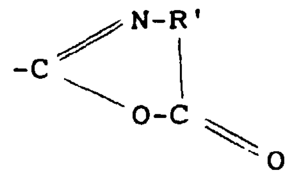

si ce rapport est égal à 1.

Les exemples suivants illustrent l'invention.

Dans ces exemples :

- les points de fusion et de transition vitreuse ont été déterminés par Calométrie par analyse différentielle (DSC, DuPont 9900). Le point de fusion a été déterminé au maximum de l'endotherme de fusion à une vitesse de chauffage de 20° C/min, au second passage après un cycle de chauffage à 20°C/min jusqu'à une température supérieure au point de fusion de l'échantillon analysé suivi d'un refroidissement à 40°C/min jusqu'à température ambiante.
- Les pertes de masse ont été mesurées par Thermogravimétrie (TGA DuPont 951) à 20° C/min. $T_{5\%}$ correspond à la température à laquelle le produit a perdu 5 % de sa masse initiale.
- Les dosages chimiques ont été effectués sur un appareil Mettler DL40 RC. Un dosage à blanc a toujours été effectué avant le dosage proprement dit.

La teneur en groupes $NH_2$ a été déterminée par dosage à 40°C avec une solution 0,1N d'acide perchlorique dans l'éthanol, l'échantillon étant dissous dans un mélange phénol/éthanol/eau 50/25/25 (vol.).

La teneur en groupes hydroxy a été déterminée soit par acétylation et dosage en retour de l'acidité par une solution alcoolique de potasse 0,1N, soit par résonance magnétique nucléaire du proton (RMN).

- la viscosité de solution $\eta_{inh}$ a été déterminée dans le méta-crésol à 30°C à des concentrations de 0,5 g/dl.

Les coupleurs de chaînes utilisés et les oligomères de départ sont les suivants.

Coupleurs de chaînes :

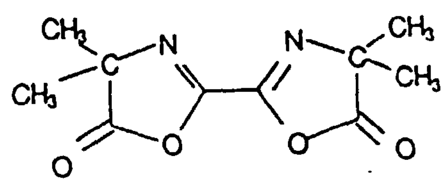

A

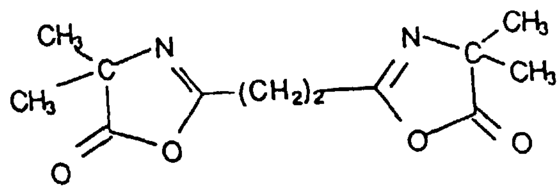

B

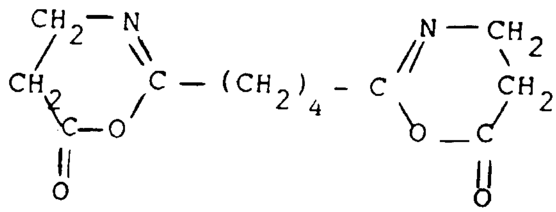

C

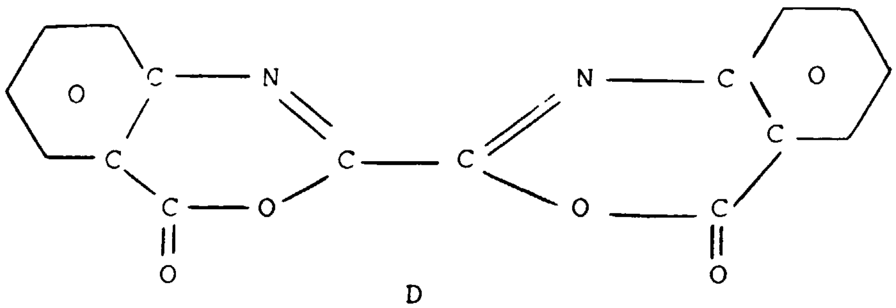

D

Les bisoxazinones ou bisoxazolinones A, B et C, de formules

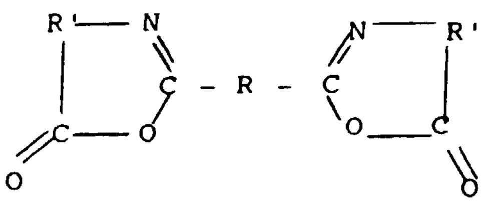

peuvent être obtenues par cyclisation de diacides de formules

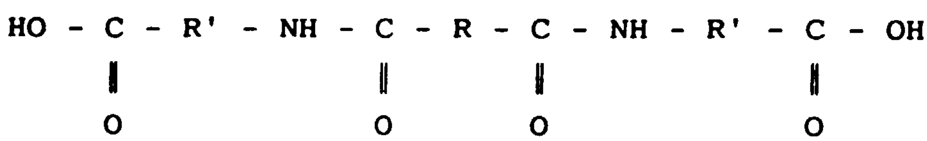

et la bisbenzoxazinone D par réaction de l'anhydride isatoïque sur le dichlorure d'oxalyle selon le schéma suivant :

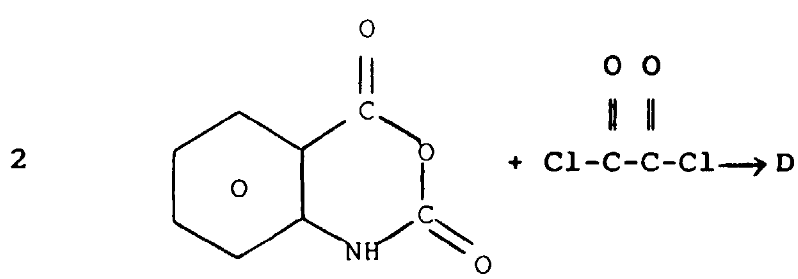

Oligomères :

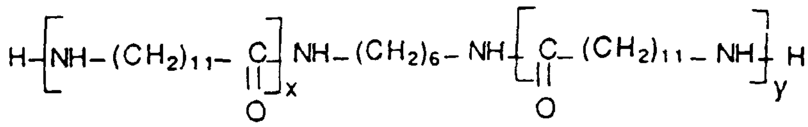

I

avec x + y = 5,17

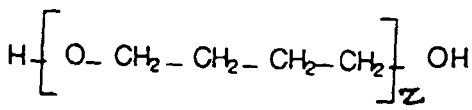

II

avec z = 14,19

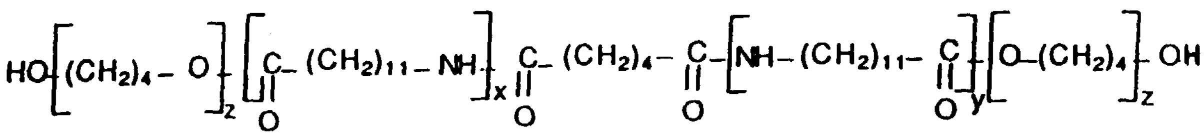

III

avec z = 14,19 et x + y = 4,72.

L'oligomère IV est un oligoamide à structure semi-aromatique et à terminaisons $diNH_2$, obtenu à partir

- d'acide téréphtalique (T)
- d'acide isophtalique (I)
- de lactame 12 (L12)
- de bis(3,3'-méthyl-4,4'-amino-cyclohexyl) méthane (BMACM)

avec T/I/L12/BMACM = 3/2/2,5/6 (en moles).

L'oligomère V est un polyéther à terminaisons $diNH_2$ vendu sous la marque enregistrée JEFFAMINE ED 900 par la société TEXACO.

Les caractéristiques des oligomères de départ sont consignées dans le tableau ci-dessous.

| Oligomères | [terminaisons] (mol/kg) | $\eta$ inh ($dlg^{-1}$) | $\overline{M_n}$ | Tf (°C) | $T_{5\%}$ (°C) |
|---|---|---|---|---|---|
| I | $[NH_2]$=1,76 | 0,20 | 1136 | 155 | 366 |
| II | [OH]=1,925 | 0,08 | 1040 | 25 | 304 |
| III | [OH]=0,64 | 0,30 | 3120 | 24 et 147 | 335 |
| IV | $[NH_2]$= 0,78 | 0,17 | 2575 | - | 340 |
| V | $[NH_2]$= 2,21 | 0,10 | 905 | 28 | 328 |

**Exemple 1 : Réaction de l'oligoamide diamino I avec la bisoxazolinone A**

Dans un réacteur de 50 $cm^3$ équipé d'un chauffage à bain d'huile, d'une entrée et d'une sortie d'azote, et d'une agitation mécanique à ancre, on introduit 10,00 g (8,80 mmol) de I et 1,973 g (8,80 mmol) de bisoxazolinone A. Le

mélange est porté à 200° C sous agitation pendant 15 min pour donner, après refroidissement, un polymère ayant les caractéristiques suivantes:

| | |
|---|---|
| $[NH_2]$ = | 0,09 mol/kg |
| $[\eta]_{inh}$ = | 0,95 dl/g |
| $T_f$ = | 149° C |
| $T_{5\%}$ = | 390° C |

**Exemple 2 : Réaction de l'oligoamide diamino I avec la bisoxazolinone B**

Dans un réacteur de 50 $cm^3$ équipé d'un chauffage à bain d'huile, d'une entrée et d'une sortie d'azote, et d'une agitation mécanique à ancre, on introduit 6,640 g (5,84 mmol) de I et 1,473 g (5, 84 mmol) de bisoxazolinone B. Le mélange est porté à 180° C sous agitation pendant 15 min pour donner, après refroidissement, un polymère ayant les caractéristiques suivantes:

| | |
|---|---|
| $[NH_2]$ = | 0,11 mol/kg |
| $[\eta]_{inh}$ = | 0,90 dl/g |
| $T_f$ = | 148° C |
| $T_{5\%}$ = | 385° C |

**Exemple 3 : Réaction de l'oligoéther dihydroxy II avec la bisoxazolinone A**

Dans un réacteur de 50 $cm^3$ équipé d'un chauffage à bain d'huile, d'une entrée et d'une sortie d'azote, et d'une agitation mécanique à ancre, on introduit 6,00 g (5,77 mmol) de II, 1,294 g (5,77 mmol) de bisoxazolinone A et 0,036 g (0,5%) de 4,4'-diméthylaminopyridine. Le mélange est porté à 185° C sous agitation pendant 20 min pour donner, après refroidissement, un polymère ayant les caractéristiques suivantes:

| | |
|---|---|
| [OH] = | 0,15 mol/kg |
| $[\eta]_{inh}$ = | 0,30 dl/g |
| $T_f$ = | 35° C |
| $T_{5\%}$ = | 340° C |

**Exemple 4 : Réaction de l'oligoéther dihydroxy II avec la bisoxazinone C**

Dans un réacteur de 50 $cm^3$ équipé d'un chauffage à bain d'huile, d'une entrée et d'une sortie d'azote, et d'une agitation mécanique à ancre, on introduit 6,00 g (5,77 mmol) de II et 1,456 g (5,77 mmol) de bisoxazinone C. Le mélange est porté à 190° C sous agitation pendant 120 min pour donner, après refroidissement, un polymère ayant les caractéristiques suivantes:

| | |
|---|---|
| [OH] = | 0,33 mol/kg |
| $[\eta]_{inh}$ = | 0,24 dl/g |
| $T_f$ = | 28° C |
| $T_{5\%}$ = | 337° C |

**Exemple 5 : Réaction de l'oligomère tribloc dihydroxy III avec la bisoxazolinone B**

Dans un réacteur de 25 $cm^3$ équipé d'un chauffage à bain d'huile, d'une entrée et d'une sortie d'azote, et d'une agitation mécanique à ancre, on introduit 4,050 g (1,30 mmol) de III, 0,34 g (1,35 mmol) de bisoxazolinone B et 0,011 g de 4,4'-diméthylaminopyridine. Le mélange est porté à 200° C sous agitation pendant 45 min pour donner, après refroidissement, un polymère ayant les caractéristiques suivantes :

| | |
|---|---|
| $[\eta]_{inh}$ = | 0,92 dl/g |
| $T_f$ = | 27 et 149°C |
| $T_{5\%}$ = | 382°C |

**Exemple 6 : Réaction de l'oligoamide diamino IV avec la bisoxazinone D**

Dans un réacteur de 80 $cm^3$ muni d'une agitation et équipé d'un système permettant de travailler sous atmosphère

inerte ($N_2$), on introduit 25,75 g (0,01 mole) d'oligoamide IV, et 2,92 g (0,01 mole) de bisoxazinone D.

Le réacteur est plongé dans un bain d'huile régulant à 300° C. Le milieu réactionnel est agité par un agitateur tournant à 50 tours/min. Après 20 minutes dans ces conditions, on observe un accroissement de la viscosité du milieu réactionnel qui nécessite une diminution de la vitesse d'agitation à 10 tours/min. La réaction est alors poursuivie 5 minutes puis arrêtée.

Le polymère obtenu est translucide et présente selon l'analyse thermique une transition vitreuse à 203° C.

Sa viscosité de solution est de 0,83 dl $g^{-1}$ et la concentration en $NH_2$ résiduel est de 0,2 mol/kg.

**Exemple 7 : Réaction de l'oligoéther diamino V avec la bisoxazolinone B**

Dans un réacteur de 25 $cm^3$ équipé d'un chauffage à bain d'huile, d'une entrée et d'une sortie d'azote, et d'une agitation mécanique à ancre, on introduit 3,75 g (4,14 mmol) de V et 1,045 g (4,14 mmol) de bisoxazolinone B. Le mélange est porté à 185° C sous agitation pendant 20 min pour donner, après refroidissement, un polymère ayant les caractéristiques suivantes:

| | |
|---|---|
| $[NH_2]$ = | 0,13 mol/kg |
| $[\eta]_{inh}$ = | 0,31 dl/g |
| $T_v$ = | - 32°C |
| $T_{5\%}$ = | 335°C |

**Exemple 8 : Réaction de l'oligoamide diamino I et de l'oligoéther diamino V avec la bisoxazolinone A**

Dans le réacteur utilisé à l'exemple précédent, on introduit 1,18 g (1,30 mmol) de V, 1,48 g (1,31 mmol) de I et 0,58 g (2,60 mmol) de A. Le mélange est porté à 200° C sous agitation pendant 30 min pour donner, après refroidissement, un polymère ayant les caractéristiques suivantes :

| | |
|---|---|
| $[NH_2]$ = | 0,12 mol/kg |
| $[\eta]_{inh}$ = | 0,75 dl/g |
| $T_f$ = | 148°C |
| $T_v$ = | - 19°C |
| $T_{5\%}$ = | 365°C |

## Revendications

**1.** Polymères et copolymères comprenant au moins un motif récurrent de formule :

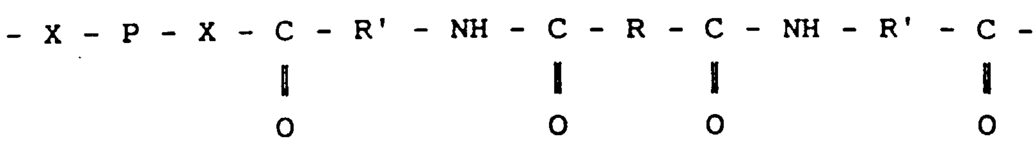

dans laquelle :

- X est O ou NH,
- R est une liaison simple, une chaîne hydrocarbonée aliphatique, linéaire ou cyclique, ou aromatique, pouvant être substituée,
- R' est une chaîne hydrocarbonée aliphatique ou aromatique, pouvant être substituée et dont la partie la plus courte reliant les motifs

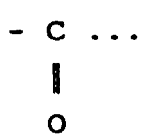

et - NH ... voisins comporte un ou deux atomes de carbone, et

- P est le reste d'un oligomère HX - P - XH dont la viscosité de solution déterminée dans le méta-crésol à 30° C à des concentrations de 0,5 g/dl est inférieure à 0,50 dl.g$^{-1}$, et dont la masse molaire moyenne en nombre $\overline{M_N}$ est comprise entre 300 et 5 000 g/mol,

lesdits polymères étant les produits de réaction d'un ou plusieurs oligomère(s) HX-P-XH tels que définis ci-dessus et d'une ou plusieurs bisoxazinone(s) et/ou bisoxazolinone(s) de formule(s) :

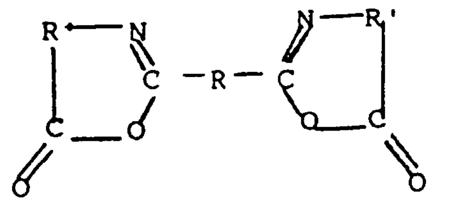

réaction dans laquelle le rapport

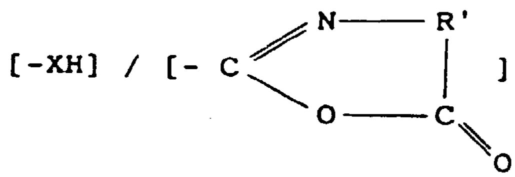

est maintenu entre 0,95 et 1,05.

**2.** Polymères et copolymères selon la revendication 1, dans lesquels R est une liaison simple entre deux atomes de carbone.

**3.** Polymères et copolymères selon la revendication 1, dans lesquels R est un groupe $-(CH_2)_q-$, q étant un nombre entier compris entre 1 et 10.

**4.** Polymères et copolymères selon l'une des revendications 1 à 3, dans lesquels R' est un groupe $-(C(CH_3)_2)-$.

**5.** Polymères et copolymères selon l'une des revendications 1 à 3, dans lesquels R' est un groupe $-(CH_2)_2-$.

**6.** Polymères et copolymères selon l'une des revendications 1 à 3 dans lesquels R' est un groupe

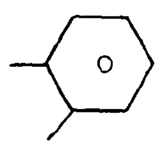

**7.** Polymères et copolymères selon l'une des revendications 1 à 6, dans lesquels P est le reste d'un oligomère comportant :

- un ou plusieurs blocs de polyamide et/ou
- un ou plusieurs blocs de polyester et/ou
- un ou plusieurs blocs de polyéther.

**8.** Procédé d'obtention de polymères et copolymères comprenant au moins un motif récurrent de formule:

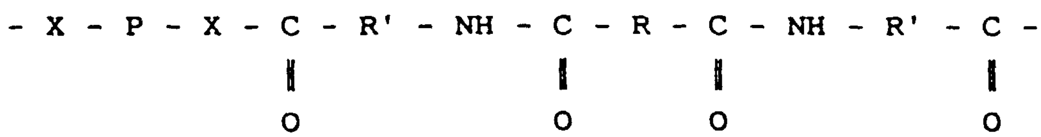

dans laquelle :

- R est une liaison simple, une chaîne hydrocarbonée aliphatique, linéaire ou cyclique, ou aromatique, pouvant être substituée,
- R' est une chaîne hydrocarbonée aliphatique ou aromatique, pouvant être substituée et dont la partie la plus courte reliant les motifs

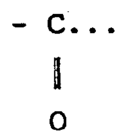

  et -NH... voisins comporte un ou deux atomes de carbone, et
- P est le reste d'un oligomère HX - P - XH dont la viscosité de solution déterminée dans le méta-crésol à 30°C à des concentrations de 0,5 g/dl est inférieure à 0,50 $dl.g^{-1}$, et dont la masse molaire moyenne en nombre $M_N$ est comprise entre 300 et 5 000 g/mol,

dans lequel on procède à une réaction d'addition en masse d'un ou plusieurs oligomère(s) HX-P-XH et d'une ou plusieurs bisoxazinone(s) et/ou bisoxazolinone(s) de formule(s) :

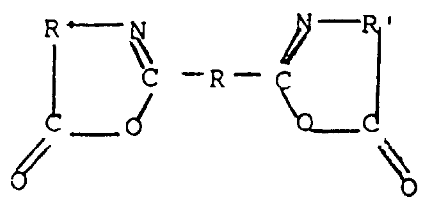

à une température supérieure à la température de fusion du ou des oligomère(s), à pression atmosphérique sous atmosphère inerte, en maintenant le rapport

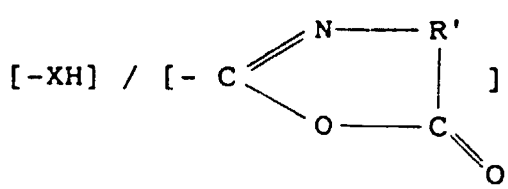

entre 0,95 et 1,05.

**9.** Procédé selon la revendication 8, caractérisé en ce que la température du milieu réactionnel est choisie entre 100 et 350° C, de sorte que la viscosité du ou des oligomères soit inférieure à 50 Pa.s, et en ce que la durée de la réaction est comprise entre 1 et 120 minutes.

**10.** Procédé selon la revendication 8 ou 9, caractérisé en ce qu'on ajoute au milieu réactionnel 0,001 à 2 % en poids, par rapport aux oligomères, aux bisoxazinones et bisoxazolinones, d'un ou plusieurs catalyseurs.

**11.** Procédé selon l'une des revendications 8 à 10, caractérisé en ce que la réaction d'addition en masse est effectuée en discontinu dans un réacteur agité, ou dans une extrudeuse.

## Patentansprüche

**1.** Polymere und Copolymere, enthaltend mindestens eine wiederkehrende Einheit der Formel

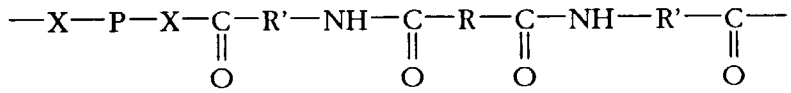

in der:

- X O oder NH ist,
- R eine Einfachbindung oder eine aromatische oder lineare oder cyclische, aliphatische Kohlenwasserstoffkette ist, die substituiert sein kann,
- R' eine aromatische oder aliphatische Kohlenwasserstoffkette ist, die substituiert sein kann und deren kürzerer Teil, der die benachbarten Einheiten

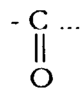

  und - NH... verbindet, ein oder zwei Kohlenstoffatome enthält und
- P der Rest eines Oligomers HX-P-XH ist, wobei die Viskosität der Lösung, die bei 30 °C bei Konzentrationen von 0,5 g/dl im Metakresol bestimmt wird, kleiner als 0,50 dl · $g^{-1}$ ist und die zahlenmittlere Molekularmasse $\overline{M_N}$ zwischen 300 und 5000 g/mol liegt,

wobei diese Polymere Produkte der Reaktion eines oder mehrerer Oligomere HX-P-XH, wie oben definiert, mit einem oder mehreren Bisoxazinonen und/oder Bisoxazolinen der Formel(n)

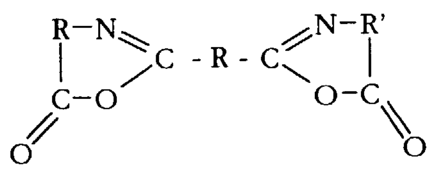

sind,
wobei bei der Reaktion das Verhältnis

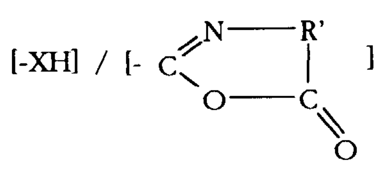

zwischen 0,95 und 1,05 konstantgehalten wird.

**2.** Polymere und Copolymere nach Anspruch 1, wobei R eine Einfachbindung zwischen zwei Kohlenstoffatomen ist.

**3.** Polymere und Copolymere nach Anspruch 1, wobei R eine Gruppe $-(CH_2)_q-$ ist, wobei q eine ganze Zahl zwischen 1 und 10 ist.

**4.** Polymere und Copolymere nach einem der Ansprüche 1 bis 3, wobei R' eine Gruppe $-(C(CH_3)_2)-$ ist.

**5.** Polymere und Copolymere nach einem der Ansprüche 1 bis 3, wobei R' eine Gruppe $-(CH_2)_2-$ ist.

**6.** Polymere und Copolymere nach einem der Ansprüche 1 bis 3, wobei R' eine Gruppe

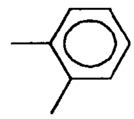

ist.

**7.** Polymere und Copolymere nach einem der Ansprüche 1 bis 6, wobei P der Rest eines Oligomers ist, enthaltend:

- einen oder mehrere Polyamidblöcke und/oder
- einen oder mehrere Polyesterblöcke und/oder
- einen oder mehrere Polyetherblöcke.

**8.** Verfahren zur Herstellung von Polymeren und Copolymeren, enthaltend mindestens eine wiederkehrende Einheit der Formel

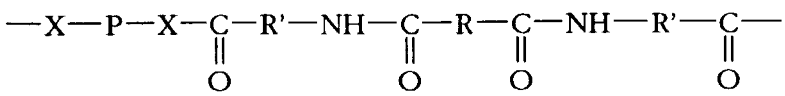

in der:

- R eine Einfachbindung oder eine aromatische oder lineare oder cyclische, aliphatische Kohlenwasserstoffkette ist, die substituiert sein kann,
- R' eine aromatische oder aliphatische Kohlenwasserstoffkette ist, die substituiert sein kann und deren kürzerer Teil, der die benachbarten Einheiten

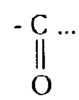

und - NH... verbindet, ein oder zwei Kohlenstoffatome enthält und
- P der Rest eines Oligomers HX-P-XH ist, wobei die Viskosität der Lösung, die bei 30 °C bei Konzentrationen von 0,5 g/dl im Metakresol bestimmt wird, kleiner als 0,50 dl · $g^{-1}$ ist und die zahlenmittlere Molekularmasse $\overline{M_N}$ zwischen 300 und 5000 g/mol liegt,

wobei man eine Additionsreaktion in Masse eines oder mehrere Oligomere HX-P-XH mit einem oder mehreren Bisoxazinonen und/oder Bis-oxazolinen der Formel(n)

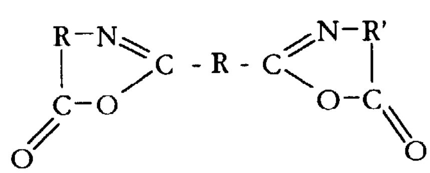

bei einer Temperatur, die höher als die Schmelztemperatur des oder der Oligomere ist, bei Atmosphärendruck unter Inertatmosphäre durchführt, wobei man das Verhältnis

[-XH] / 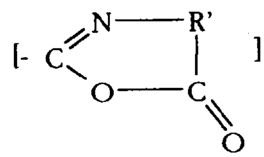

zwischen 0,95 und 1,05 konstanthält.

**9.** Verfahren nach Anspruch 8, dadurch gekennzeichnet, daß die Temperatur des Reaktionsmilieus zwischen 100 und 350 °C ausgewählt ist, so daß die Viskosität des oder der Oligomeren kleiner als 50 Pa·s ist und die Reaktionsdauer zwischen 1 und 120 Minuten liegt.

**10.** Verfahren nach Anspruch 8 oder 9, dadurch gekennzeichnet, daß man zu dem Reaktionsmilieu 0,001 bis 2 Gew.-% eines oder mehrerer Katalysatoren hinzugibt, bezogen auf die Oligomere, die Bisoxazinone und Bisoxazolinone.

**11.** Verfahren nach einem der Ansprüche 8 bis 10, dadurch gekennzeichnet, daß die Additionsreaktion in Masse diskontinuierlich in einem gerührten Reaktor oder in einem Extruder durchgeführt wird.

## Claims

**1.** Polymers and copolymers containing at least one repeat unit of formula:

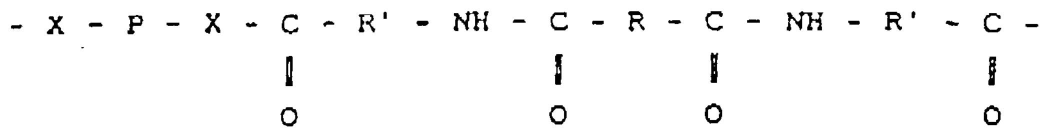

in which:

- X is O or NH,
- R is a single bond or a linear or cyclic, aliphatic or aromatic hydrocarbon chain, which may be substituted,
- R' is an aliphatic or aromatic hydrocarbon chain which may be substituted and in which the shortest part connecting the neighbouring units

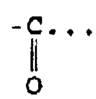

  and -NH... contains one or two carbon atoms, and
- P is the residue of an oligomer HX-P-XH whose solution viscosity determined in meta-cresol at 30°C at concentrations of 0.5 g/dl is lower than 0.50 dl $g^{-1}$ and whose number-avorage molecular mass $\overline{M}_N$, is between 300 and 5000 g/mol,

the said polymers being the products of reaction of one or more oligomer(s) HX-P-XH as defined above and of one or more biaoxazinono(s) and/or bisoxazolinone (s) of formula(e):

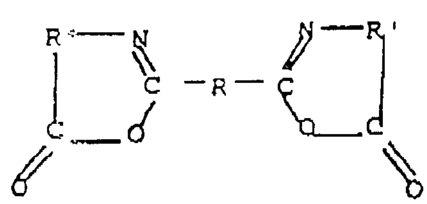

in which reaction the ratio

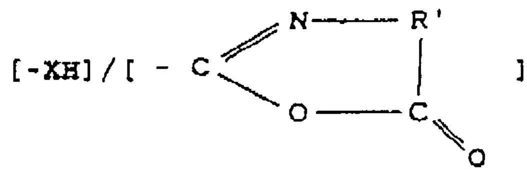

is maintained between 0.95 and 1.05.

**2.** Polymers and copolymers according to Claim 1, in which R is a single bond between two carbon atoms.

**3.** Polymers and copolymers according to Claim 1, in which R is a $-(CH_2)_q-$ group, q being an integer between 1 and 10.

**4.** Polymers and copolymers according to one of Claims 1 to 3, in which R' is a $-(C(CH_3)_2)-$ group.

**5.** Polymers and copolymers according to one of Claims 1 to 3, in which R' in a $-(CH_2)_2-$ group.

**6.** Polymers and copolymers according to one of Claims 1 to 3, in which R' is a group

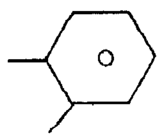

**7.** Polymers and copolymers according to one of Claims 1 to 6, in which P is the residue of an oligomer containing:

- one or more polyamide blocks and/or
- one or more polyester blocks and/or
- one or more poljether blocks.

**8.** Process for obtaining polymers and copolymers containing at least one repeat unit of formula:

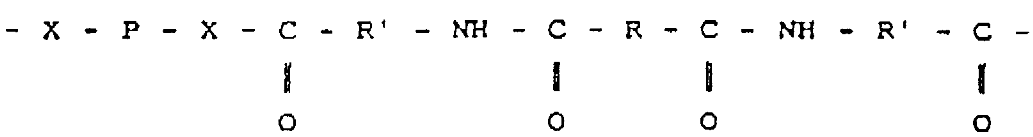

in which:

- R is a single bond or a linear or cyclic, aliphatic or aromatic hydrocarbon chain which may be substituted,
- R' is an aliphatic or aromatic hydrocarbon chain which may be substituted and in which the shortest part joining the neighbouring units

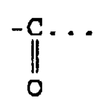

and -NH... contains one or two carbon atoms, and
- P is the residue of an oligomer HX-P-XH whose solution viscosity determined in meta-cresol at 30°C at concentrations of 0.5 g/dl is lower than 0.50 dl $g^{-1}$, and whose number-average molecular mass $M_N$ is between 300 and 5000 g/mol,

in which a bulk addition reaction of one or a number of oligomer(s) HX-P-XH and of one or a number of biaoxazinone (s) and/or biaoxazolinone(s) of formula (e) :

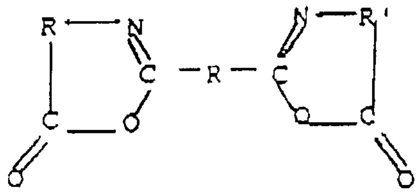

is carried out at a temperature above the melting temperature of the oligomer(s), at atmospheric pressure under inert atmosphere, the ratio

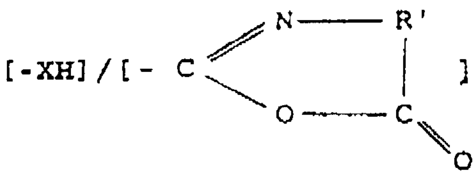

being maintained between 0.95 and 1.05

**9.** Process according to Claim 8, characterized in that the temperature of the reaction mixture is chosen between 100 and 350°C so that the viscosity of the oligomer(s) is lower than 50 Pa s and in that the reaction period is between 1 and 120 minutes.

**10.** Process according to Claim 8 or 9, characterized in that 0.001 to 2 % by weight of one or more catalysts, in relation to the oligomers, the bisoxazinones and bis-oxazolinones, is added to the reaction mixture.

**11.** Process according to one of Claims 8 to 10, characterized in that the bulk addition reaction is performed noncontinuously in a stirred reactor, or in an extruder.